# EUROPEAN PATENT APPLICATION

(11) **EP 4 711 729 A1**
(43) Date of publication of application: **18.03.2026**
(21) Application number: 25195315.4
(22) Date of filing: 12.08.2025
(51) Int. Cl.: G01L 19/00, G01L 19/06

(54) **MEDIA-ISOLATED RELATIVE GAUGE PRESSURE SENSOR**

(30) Priority: 16.09.2024 IN 202411069844
(71) Applicant: Honeywell International Inc., Charlotte, NC 28202 (US)
(72) Inventor: GIRAMALLANAVAR, Shivaraj, Charlotte, 28202 (US); MN, Naveen Kumar, Charlotte, 28202 (US); YAGATI, Veeresh Shivaprakash, Charlotte, 28202 (US)
(74) Representative: Haseltine Lake Kempner LLP

(57) **Abstract**

Apparatuses, systems, and methods are provided for media-isolated relative gauge pressure sensors. In some embodiments, an apparatus comprises a base port, an assembly, and a tubular connector. The tubular connector may comprise a cavity for allowing air at a reference pressure to enter internal portions of the tubular connector and the assembly such that the cavity is configured to facilitate flow of the air at the reference pressure to a back side of a sensing element, wherein the back side of the sensing element is opposite to a sensing side of the sensing element that is configured to receive pressure, via an incompressible fluid, from a medium being measured. The tubular connector may be mechanically coupled to a metal tube inserted in at least a portion of the cavity. The tubular connector may comprise an O-ring surrounding an outer circumference of the metal tube.

## Description

### FIELD OF THE INVENTION

Embodiments of the present disclosure generally relate to media-isolated relative gauge pressure sensors.

### BACKGROUND

Some pressure sensors, in some examples, comprise a piezoresistive sensing element which is configured to convert a pressure exerted by a medium to be measured into a change in resistance. In some examples, some pressure sensors comprise components which prevent the medium being measured from coming into direct contact with the sensing element. Applicant has identified many technical challenges and difficulties associated with such pressure sensors. Through applied effort, ingenuity, and innovation, many of these identified problems have been solved by developing solutions that are included in embodiments of the present disclosure, many examples of which are described in detail herein.

### BRIEF SUMMARY

Various example embodiments described herein relate to media-isolated relative gauge pressure sensors.

In accordance with various embodiments of the present disclosure, an apparatus is provided. In some embodiments, the apparatus comprises: (1) a base port; (2) an assembly welded to the base port, and (3) a tubular assembly coupled to the assembly, wherein: (i) the tubular connector comprises a cavity for allowing air at a reference pressure to enter internal portions of the tubular connector and the assembly such that the cavity is configured to facilitate flow of the air at the reference pressure to a back side of a sensing element, wherein the back side of the sensing element is opposite to a sensing side of the sensing element that is configured to receive pressure, via an incompressible fluid, from a medium being measured; (ii) the tubular connector is coupled to a metal tube inserted in at least a portion of the cavity and disposed substantially parallel to the tubular connector; and (iii) the tubular connector comprises an O-ring surrounding an outer circumference of the metal tube.

In some embodiments, the assembly is coupled to the tubular connector via at least one of: crimping; or a crimping adhesive.

In some embodiments, the assembly further comprises: (i) a diaphragm resistance welded to the assembly; (ii) a transistor outline (TO) header element having a first substantially cylindrical cavity of a first diameter and a second substantially cylindrical cavity of a second diameter, wherein the first diameter is greater than the second diameter; (iii) the sensing element wire-bonded to the TO header element; (iv) the incompressible fluid dispensed between the TO header element and the diaphragm; and (v) a printed circuit board assembly (PCBA) comprising electronics, wherein the PCBA is coupled to the TO header via metal pins.

In some embodiments, the base port defines a cavity of at least one diameter at approximately its center, and wherein the diaphragm is configured to receive pressure from a medium via the cavity defined by the base port and impart the pressure to the incompressible fluid, and wherein the incompressible fluid is configured to impart the pressure to a sensing side of the sensing element.

In some embodiments, the reference pressure is atmospheric pressure.

In some embodiments, the PCBA is configured to calculate a net pressure based on the reference pressure and the pressure of the medium.

In some embodiments, the tubular connector is comprised of plastic.

In accordance with various embodiments of the present disclosure, a system is provided. In some embodiments, the system comprises: an automotive exhaust assembly; and a media-isolated relative gauge pressure sensor for measuring exhaust pressure with respect to atmospheric pressure, wherein the media-isolated relative gauge pressure sensor comprises: (1) a base port; (2) an assembly welded to the base port; and (3) a tubular connector coupled to the assembly, wherein: (i) the tubular connector comprises a cavity for allowing air at a reference pressure to enter internal portions of the tubular connector and the assembly such that the cavity is configured to facilitate flow of the air at the reference pressure to a back side of a sensing element, wherein the back side of the sensing element is opposite to a sensing side of the sensing element that is configured to receive pressure, via an incompressible fluid, from a medium being measured; (ii) the tubular connector is coupled to a metal tube inserted in at least a portion of the cavity and disposed substantially parallel to the tubular connector; and (iii) the tubular connector comprises an O-ring surrounding an outer circumference of the metal tube.

In some embodiments, the assembly is coupled to the tubular connector via at least one of: crimping; or a crimping adhesive.

In some embodiments, the assembly further comprises: (i) a diaphragm resistance welded to the assembly; (ii) a transistor outline (TO) header element having a first substantially cylindrical cavity of a first diameter and a second substantially cylindrical cavity of a second diameter, wherein the first diameter is greater than the second diameter; (iii) the sensing element wire-bonded to the TO header element; (iv) the incompressible fluid dispensed between the TO header element and the diaphragm; and (v) a printed circuit board assembly (PCBA) comprising electronics, wherein the PCBA is coupled to the TO header via metal pins.

In some embodiments, the base port defines a cavity of at least one diameter at approximately its center, and wherein the diaphragm is configured to receive pressure from a medium via the cavity defined by the base port and impart the pressure to the incompressible fluid, and wherein the incompressible fluid is configured to impart the pressure to a sensing side of the sensing element.

In some embodiments, the reference pressure is atmospheric pressure.

In some embodiments, the PCBA is configured to calculate a net pressure based on the reference pressure and the pressure of the medium.

In some embodiments, the tubular connector is comprised of plastic.

In accordance with various embodiments of the present disclosure, a method is provided. In some embodiments, the method comprises: (i) receiving, via an incompressible fluid and a diaphragm, a pressure of a medium being measured by a sensing side of a sensing element; (ii) receiving, via a cavity of a tubular connector, a reference pressure by a back side of the sensing element, wherein the back side of the sensing element is opposite to the sensing side of the sensing element; and (iii) calculating, based on the pressure of the medium and the reference pressure, a net pressure.

In some embodiments, the receiving the pressure of the medium being measured further comprises receiving the pressure via a cavity of at least one diameter defined by a base port at approximately a center of the base port.

In some embodiments, the receiving the reference pressure further comprises receiving the reference pressure via air at the reference pressure which travels through the tubular connector and an assembly.

In some embodiments, the calculating the net pressure further comprise calculating the net pressure via one or more electronic components of a printed circuit board assembly (PCBA).

In some embodiments, the sensing element is coupled to a header element disposed between the tubular connector and the assembly.

In some embodiments, the reference pressure is atmospheric pressure.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A is a cross-sectional view of an example media-isolated relative gauge pressure sensor;
FIG. 1B is a close-up cross-sectional view of the example media-isolated relative gauge pressure sensor of FIG. 1A;
FIG. 2 is a perspective cross-sectional view of an example header element;
FIG. 3 is a perspective cross-sectional view of an example header element;
FIG. 4 is a perspective cross-sectional view of an example header element;
FIG. 5A is a series of perspective views of a header plate assembly of an example header element;
FIG. 5B is a perspective cross-sectional view of an example header element including the header plate assembly of FIG. 5A;
FIG. 6 is a close-up cross-sectional view of an example media-isolated relative gauge pressure sensor; and
FIG. 7 is a flowchart of an exemplary method of constructing a media-isolated relative gauge pressure sensor, in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically coupled," "electrically coupling," "electrically couple," "electrically connected," "electrically connecting," "electrically connect," "in communication with," or "in electronic communication with" in the present disclosure refers to two or more elements or components being connected through wired means and/or wireless means, such that signals, electrical voltage/current, data and/or information may be transmitted to and/or received from these elements or components.

The term "in fluid communication with" in the present disclosure refers to two or more elements or components being connected through one or more paths or pathways, such that a fluid or other flowing media may be input to and/or output from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

The term "sensor" refers to a component that may detect, measure, and/or identify any one or more attributes or characteristics of an environment of media, including but not limited to pressure(s).

In some examples, pressure sensors may be configured to measure pressure via piezoresistive sensing elements. For example, a piezoresistive sensing element may comprise a Wheatstone bridge which serves to transform received pressure into a change in resistance. In some examples, pressure sensors which do not take a reference pressure (e.g., such as atmospheric pressure at various altitudes) into consideration may not provide accurate readings. In some examples, pressure sensors which are not media-isolated may be at risk of moisture and/or other contaminants (e.g., the media being measured) entering into and damaging various components of the sensors (e.g., electronics, metal components, etc.).

Embodiments of the present disclosure, in some examples, provide apparatuses, systems, and methods for media-isolated relative gauge pressure sensors. Media-isolated relative gauge pressure sensors may be used in applications such as, for example, industrial processing applications, automotive applications (e.g., considering altitude changes by vehicles when measuring pressures of exhaust), heating, ventilation, and air conditioning (HVAC) systems, aerospace applications, medical device applications, oil and/or gas industry applications, environmental monitoring applications, water and/or wastewater management applications, food and/or beverage industry applications, engine management applications, unmanned aerial vehicle (UAV) applications, frictionless braking applications, and/or other applications.

Example embodiments of the present disclosure, in some examples, may include a base port, an assembly, and a tubular connector. The assembly may be a hex-assembly and/or another type of assembly, and the assembly may be laser welded to the base port. The base port may comprise a cavity, wherein the cavity includes regions of various diameters (e.g., the cavity may be comprised of one or more cavities of various diameters stacked end-to-end) such that the cavity allows a medium being measured to travel from one end of the base port to another end of the base port.

The tubular connector may be comprised of metal and/or other materials. The tubular connector may be mechanically coupled to the assembly (e.g., via crimping and/or crimping adhesive). The tubular connector may include a cavity (e.g., a substantially L-shaped cavity, a substantially cylindrical cavity, and/or the like) for allowing air at a reference pressure (e.g., atmospheric pressure) to enter internal portions of the tubular connector, the assembly, and/or the base port. The tubular connector may be mechanically coupled to a metal tube inserted in at least a portion of the cavity (e.g., wherein the metal tube is substantially parallel to an axis of the tubular connector). The tubular connector may further comprise an O-ring, wherein the O-ring surrounds an outer circumference of the metal tube. The O-ring may be configured to prevent moisture and/or other contaminants from reaching a sensing element, a printed circuit board assembly (PCBA), electronic components coupled to the PCBA, and/or other components of a pressure sensor.

The assembly may further comprise a diaphragm. The diaphragm may be coupled to the assembly, for example, via welding. The assembly may further comprise a transistor outline (TO) header element having a first substantially cylindrical cavity of a first diameter and a second substantially cylindrical cavity of a second diameter. The first diameter may be greater than the second diameter. The assembly may further comprise a sensing element. The sensing element may be wire bonded to the TO header element. The assembly may further comprise an incompressible fluid dispensed between the TO header element and the diaphragm.

The assembly may further comprise a PCBA comprising electronics (e.g., such as application-specific integrated circuits (ASICs). The PCBA may be coupled to the TO header element via metal pins. In some examples, the metal pins are coupled to the header element via glass fusion, for example. The metal pins may be coupled to the PCBA, for example, via welding, contacts, silver paste, and/or the like. In some examples, one or more of the electronics comprised by the PCBA may be configured to calculate a net pressure based on the reference pressure and the pressure of the medium being measured.

In some examples, the diaphragm may be configured to receive pressure from a medium via the cavity defined by the base port and impart the pressure to the incompressible fluid. The incompressible fluid may be configured to impart the pressure to a sensing side of the sensing element.

The sensing element may comprise a sensing side and a back side. The sensing side may be the side that receives pressure, via the incompressible fluid, from the medium being measured. The back side may be the side that receives the reference pressure, for example, via the cavity defined by the tubular connector.

In an example, a pressure sensor may receive 10 bar of pressure from a medium being measured. In this example, the pressure sensor may receive 1 bar of pressure from atmospheric pressure. The atmospheric pressure may be received as negative pressure. Thus, the total measured pressure would be 10 bar + (-1 bar) = 9 bar. In this example, atmospheric pressure is 1 bar at sea level. However, atmospheric pressure varies with altitude. For example, atmospheric pressure may increase below sea level (e.g., ranging from approximately 1.5 bar to approximately 1.8 bar in a mine) and decrease above sea level (e.g., ranging from approximately 0.4 bar to approximately 0.5 bar on a mountain).

As described herein, embodiments of the present disclosure, in some examples, provide apparatuses, systems and/or methods for media-isolated relative gauge pressure sensors.

To address challenges and limitations associated with pressure sensors, various examples of the present disclosure may be provided. For example, various examples of the present disclosure may provide example apparatuses, systems and/or methods for media-isolated relative gauge pressure sensors.

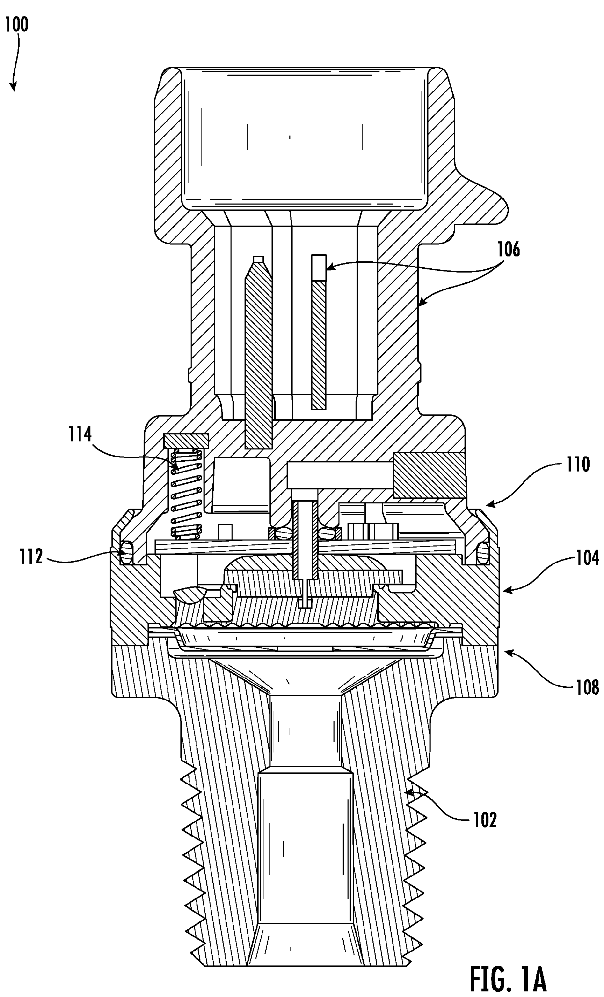

FIGS. 1A-1B show various views of an example media-isolated relative gauge pressure sensor 100. Referring now to FIG. 1A, a cross-sectional view of the example media-isolated relative gauge pressure sensor 100 is provided. The sensor 100 comprises a base port 102, an assembly 104, a connector 106 comprising one or more terminals, a welding location 108, a mechanical coupling location 110, a first O-ring 112, and at least one spring 114. Although the example of FIG. 1A shows one base port, one assembly, one connector, one welding location, one mechanical coupling location, one O-ring, and one spring, any number of such components may be present in a sensor, such as a media-isolated relative gauge pressure sensor.

The base port 102 may be comprised of metal and/or other materials. For example, the base port 102 may be comprised of SS304. The base port 102 may comprise external threading. For example, the external threading may be configured to allow the base port to mechanically couple with other devices and/or other components of devices. The base port 102 may comprise a first cavity, wherein the first cavity includes regions of various diameters (e.g., the first cavity may be comprised of one or more sub-cavities of various diameters stacked end-to-end) such that the first cavity allows a medium being measured to travel from one end of the base port to another end of the base port.

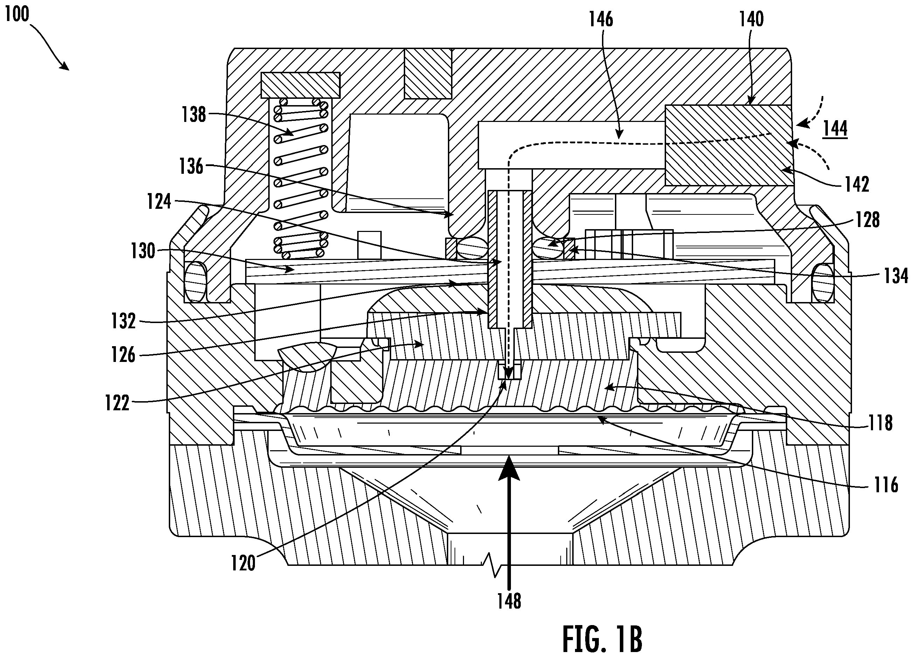

The assembly 104 may be comprised of metal and/or other materials. For example, the assembly 104 may be comprised of SS304. The assembly may be a hex-assembly and/or other types of assembly. The assembly may comprise various additional components of the sensor 100, as described herein with respect to FIG. 1B.

The connector 106 may be a tubular or substantially tubular connector. The connector 106 may be comprised of plastics, polybutylene terephthalate (PBT), and/or other materials. The connector 106 may comprise one or more terminals. The one or more terminals may be comprised of metal and/or other materials. The one or more terminals may be configured to couple electrically with other devices and/or other components of devices.

The welding location 108 may indicate one or more locations at which the base port 102 and/or the assembly 104 may be coupled to one another. The welding location 108 may comprise laser welding and/or other types of welding. For example, the base port 102 and the assembly 104 may be coupled via laser welding. The welding location 108 may include at least a portion of a perimeter of the base port 102 (e.g., up to at least the full perimeter) and/or at least a portion of a perimeter of the assembly 104 (e.g., up to at least the full perimeter).

The mechanical coupling location 110 may indicate one or more locations at which the assembly 104 and/or the connector 106 may be coupled to one another. The mechanical coupling location 110 may comprise crimping and/or other types of mechanical coupling. For example, the assembly 104 and the connector 106 may be mechanically coupled via at least a protruding portion of the assembly 104 being crimped over at least a protruding portion of the connector 106. The mechanical coupling location 110 may include at least a portion of a perimeter of the assembly 104 (e.g., up to at least the full perimeter) and/or at least a portion of a perimeter of the connector 106 (e.g., up to at least the full perimeter).

The first O-ring 112 may be comprised of silicone rubber and/or other materials. The first O-ring 112 may be configured to produce a seal (e.g., an airtight seal) such that contaminants (e.g., air, moisture, and/or the like) may not enter internal portions of the sensor 100 and/or damage its components. The first O-ring 112 may be configured to produce the seal between the assembly 104 and the connector 106. For example, the crimping coupling the assembly 104 and the connector 106 may further add pressure to the first O-ring 112, creating a more robust seal than the first O-ring 112 alone.

The at least one spring 114 may be comprised of metal and/or other materials. The at least one spring may include, for example, one spring, two springs, three springs, and/or the like, as suitable for various applications. The at least one spring 114 may be electrically and/or mechanically coupled to the one or more terminals of the connector 106. The at least one spring 114 may be configured to receive an output from at least one component of the sensor 100. The at least one spring 114 may be configured to transmit the output to the one or more terminals of the connector, wherein the one or more terminals may be configured to transmit the output to other devices and/or other components of devices.

Referring now to FIG. 1B, a close-up cross-sectional view of the example media-isolated relative gauge pressure sensor 100 of FIG. 1A is provided. The sensor 100 comprises a diaphragm 116, an incompressible fluid 118, a sensing element 120, a header element 122, a tube 124, a coupling location 126, a second O-ring 128, a PCBA 130, an adhesive 132, one or more terminals 134, at least one protruding feature 136, one or more springs 138, a second cavity 140, a plug 142, a reference pressure 144, a reference pressure path 146, and a pressure of a medium 148. Although the example of FIG. 1B shows one diaphragm, one incompressible fluid, one sensing element, one header element, one tube, one coupling location, one second O-ring, one PCBA, one adhesive, two terminals, one protruding feature, one spring, one second cavity, one plug, one reference pressure, one reference pressure path, and one pressure of a medium, any number of such components may be present in a sensor, such as a media-isolated relative gauge pressure sensor.

The diaphragm 116 may be comprised of metal and/or other materials. For example, the diaphragm 116 may be comprised of SS316L. The diaphragm 116 may comprise a textured profile. For example, the diaphragm 116 may be wavy, wherein the wavy profile is centered at approximately the center of the diaphragm 116. The diaphragm 116 may be configured to receive pressure (e.g., the pressure of the medium 148) via the first cavity defined by the base port 102. The diaphragm 116 may be configured to transmit the pressure to the incompressible fluid 118.

The incompressible fluid 118 may be comprised of silicone oil and/or other materials. The incompressible fluid 118 may be configured to receive pressure (e.g., the pressure of the medium 148) and/or force and transmit that same pressure and/or force (or substantially the same pressure and/or force) to the sensing element 120. Since the incompressible fluid 118 is incompressible, it may transmit the same or substantially the same pressure and/or force received. The incompressible fluid 118 may be dispensed into a cavity defined by the diaphragm 116, the assembly 104, and the header element 122. An object (e.g., a steel ball) may be welded (e.g., via resistance welding) to an entry location of the cavity defined by the diaphragm 116, the assembly 104, and the header element 122 such that the entry location is sealed and the incompressible fluid 118 may remain in its predetermined location.

The sensing element 120 may be a pressure sensing element. The sensing element 120 may be a force sensing element. In some examples, the sensing element 120 is piezoresistive sensing element, wherein the piezoresistive sensing element 120 comprises a Wheatstone bridge configured to convert received pressure and/or force into a change in resistance. The sensing element 120 may be configured to receive the pressure (e.g., the pressure of the medium 148) and/or force via the incompressible fluid 118. The sensing element may be configured to then transmit the sensed pressure and/or force to the PCBA 130 via the one or more terminals 134. For example, the sensing element 120 may be electrically coupled to the one or more terminals 134.

The header element 122 may be comprised of metal and/or other materials. For example, the header element 122 may be a TO header and/or other types of header element. The header element 122 may define at least one first cavity, wherein the at least one first cavity is configured to accommodate at least a portion of the tube 124. The at least one first cavity may be a substantially cylindrical cavity having a first diameter. The header element 122 may be coupled to the sensing element 120 via an adhesive. The header element 122 may comprise at least one second cavity, wherein the at least one second cavity extends from one end of the header element 122 to another end of the header element 122 such that air (and/or other media) traveling through the tube 124 may reach a side (e.g., a back side) of the sensing element 120. The at least one second cavity may be a substantially cylindrical cavity having a second diameter. The first diameter may be greater than the second diameter.

The tube 124 may be comprised of metal and/or other materials. For example, the tube 124 may be comprised of Steel DC04 (1.0338).The tube 124 may be configured allow air at the reference pressure 144 to travel to the side (e.g., the back side) of the sensing element 120 such that the sensing element 120 may sense the reference pressure 144 (e.g., a relative pressure). The tube 124 may be coupled to the header element 122 via the coupling location 126. The tube 124 may be disposed substantially parallel to the connector 106.

The coupling location 126 may indicate one or more locations at which the header element 122 and/or the tube 124 may be coupled to one another. The coupling location 126 may comprise resistance welding, laser welding, and/or other types of welding. For example, the header element 122 and the tube 124 may be coupled via resistance welding and/or laser welding. The coupling location 126 may include at least a portion of a perimeter of the at least one first cavity defined by the header element 122 (e.g., up to at least the full perimeter) and/or at least a portion of an outer perimeter of the tube 124 (e.g., up to at least the full perimeter).

The second O-ring 128 may be comprised of silicone rubber and/or other materials. The second O-ring 128 may be configured to produce a seal (e.g., an airtight seal) such that contaminants (e.g., air, moisture, and/or the like) may not reach the sensing element 120, for example, via the coupling location 126. The second O-ring 128 may be configured to produce the seal between the header 122 and the tube 124. The second O-ring 128 may be configured to surround at least a portion of the perimeter (e.g., outer circumference) of the tube 124.

The PCBA 130 may comprise one or more electronic components, for example, such as an application-specific integrated circuit (ASIC) and/or the like. The one or more electronic components may be electrically coupled to the PCBA 130. The PCBA 130 may be configured to receive, via the one or more terminals 134, the change in resistance generated by the Wheatstone bridge of the sensing element 120 responsive to the received pressure and/or force. The PCBA 130 may be further configured to convert the resistance into various types of outputs, as suitable for various applications. For example, the PCBA 130 may be configured to convert the resistance into analog output, regulated output, digital output, current output, and/or other types of output.

The adhesive 132 may be comprised of one or more types of adhesive. The adhesive 132 may be configured to couple the PCBA 130 the header element 122, the assembly 104, and/or to other components of the sensor 100.

The one or more terminals 134 may be comprised of metal and/or other materials. The one or more terminals 134 may be electrically coupled to the sensing element 120. For example, the sensing element 120 may be wire-bonded to the one or more terminals 134. The one or more terminals 134 may be electrically coupled to the PCBA 130. For example, the one or more terminals 134 may be coupled to the PCBA 130 via soldering, silver paste, and/or other methods. The one or more terminals 134 may be configured to transmit the change in resistance from the sensing element 120 to the PCBA 130.

The at least one protruding feature 136 may be a protruding feature of the connector 106. The at least one protruding feature 136 may be comprised of plastics, polybutylene terephthalate (PBT), and/or other materials. The at least one protruding feature 136 may be configured to compress the second O-ring 128, further improving the seal produced by the second O-ring 128.

The one or more springs 138 may be comprised of metal and/or other materials. The one or more springs 138 may be the at least one spring 114. The one or more springs 138 may include, for example, one spring, two springs, three springs, and/or the like, as suitable for various applications. The one or more springs 138 may be electrically and/or mechanically coupled to the one or more terminals of the connector 106. The one or more springs 138 may be configured to receive the output from the PCBA 130. one or more springs 138 may be configured to transmit the output to the one or more terminals of the connector 106, wherein the one or more terminals may be configured to transmit the output to other devices and/or other components of devices.

The second cavity 140 may be a cavity defined by the connector 106. The second cavity 140 may be configured to house the plug 142. The second cavity 140 may be configured to allow air at the reference pressure 144 to travel into the sensor 100 (e.g., such that it reaches the back side of the sensing element 120. The second cavity 140 may be coupled one or more other cavities. For example, the one or more other cavities may, along with the second cavity 140, form a substantially L-shaped cavity (and/or cavities of other geometries).

The plug 142 may be comprised of Teflon, polytetrafluoroethylene (PTFE), and/or other materials. The plug 142 may be configured to allow air at the reference pressure 144 to travel into the sensor 100. The plug 142 may be hydrophilic such that moisture present in the air traveling through the plug 142 may be absorbed by the plug 142, allowing moisture-free air (or substantially moisture-free air) to travel into the sensor 100 (e.g., to the back side of the sensing element 120).

The reference pressure 144 may be atmospheric pressure. For example, at sea level, atmospheric pressure may be equal to 1 bar. The sensing element 120 may be configured to measure both the pressure of a medium being sensed (e.g., the pressure of the medium 148) and a reference pressure (e.g., the reference pressure 144) such that the sensing element measures a net relative pressure.

The reference pressure path 146 indicates a path along which air at the reference pressure 144 may travel. For example, the air at the reference pressure 144 may travel along the reference pressure path 146 such that the air may reach a side (e.g., the back side) of the sensing element 120. The reference pressure path 146 may include the second cavity 140 (and/or the one or more other cavities forming the substantially L-shaped cavity with the second cavity 140), a cavity defined by the tube 124, the at least one second cavity defined by the header element 122, and/or other cavities. Thus, the reference pressure path 146 may allow the air to travel from outside the sensor 100 to the back side of the sensing element 120.

The pressure of the medium 148 may be pressure of the medium being sensed by the sensor 100. For example, the medium being sensed may be sensed by a sensing side and/or a "front side" of the sensing element 120, wherein the sensing side and/or the "front side" of the sensing element is the side proximate to the diaphragm 116 (and the back side is the side proximate to the header element 122). Based on the pressure of the medium 148 and the reference pressure 146, the sensor 100 may be a relative gauge pressure sensor.

In an example, a medium being sensed enters the sensor 100 through the first cavity defined by the base port 102. The pressure of the medium 148 is then exerted onto the diaphragm 116. The diaphragm 116 then exerts the pressure onto the incompressible fluid 118. The incompressible fluid 118 exerts the pressure onto the sensing element 120. Based on the arrangement of the diaphragm 116 and the incompressible fluid 118, the medium being sensed cannot come into contact with the sensing element 120, resulting in a media-isolated pressure sensor. On an opposite side of the sensing element 120, air at the reference pressure 148 (e.g., air at atmospheric pressure) enters the sensor via the second cavity 140 and the plug 142. The hydrophilic plug 142 traps moisture from the air. The air at the reference pressure 148 travels along the reference pressure path 146, through the tube 124, until it reaches the back side of the sensing element 120. The tube 124 is welded to the header element 122, creating a leakproof joint. Once the sensing element 120 receives pressure from the medium being sensed and from the air at atmospheric pressure, the Wheatstone bridge comprised in the piezoresistive sensing element 120 converts the measured change in pressure into a change in resistance (e.g., of a resistor on the Wheatstone bridge). The sensing element 120 is coupled to the one or more terminals 134 via wire-bonding, and the one or more terminals 134 are electrically coupled to the PCBA 130. The PCBA 130 receives the change in resistance via the one or more terminals 134 and provides the output (e.g., voltage output). The output travels through the one or more springs 138 to the one or more terminals of the connector 106, at which point the output can travel to one or more devices coupled to the one or more terminals of the connector 106. The sensor 100 is thus a media-isolated relative gauge pressure sensor.

Example advantages provided by the sensor 100 include protecting the sensing element 120 from the medium being sensed, which may be additionally advantages in cases where the medium being sensed is corrosive (and/or otherwise harsh), preventing damage to the sensing element 120 and/or other components of the sensor 100. Example advantages provided by the sensor 100 include preventing deterioration of the diaphragm 116 since it may be comprised of SS316L, which is resistant to corrosive and/or otherwise harsh media. Example advantages provided by the sensor 100 include isolating the PCBA 130 and/or its components from the incoming air via features including the connector 106, the tube 124, the second O-ring 128, and/or other features.

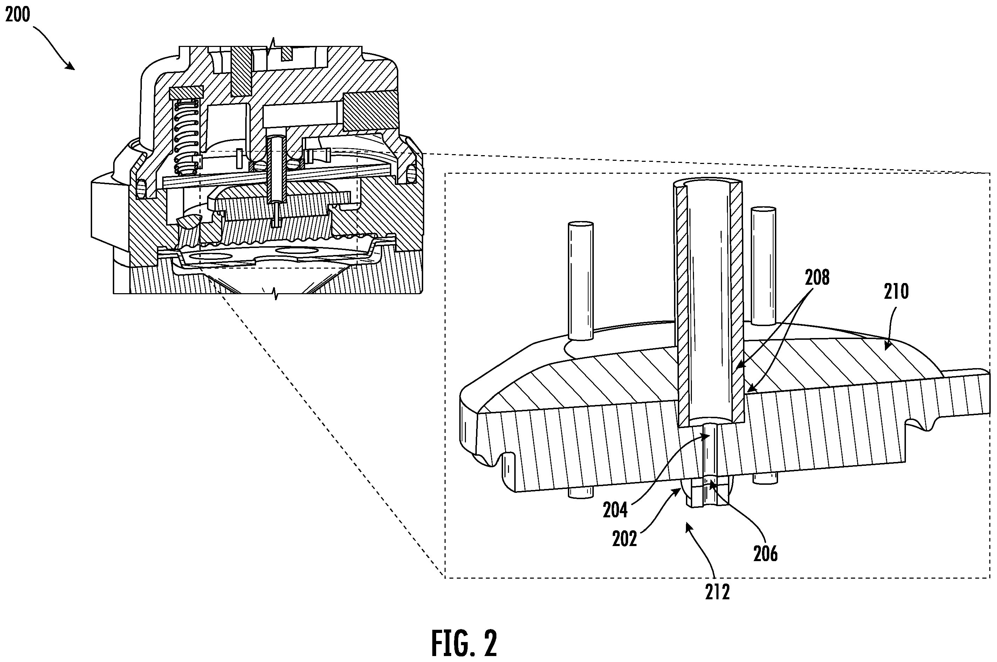

Referring now to FIG. 2, a perspective cross-sectional view of an example header element 200 is provided. The header element 200 may be or replace the header element 122 in a sensor such as the sensor 100. A blown-up view of the header element 200 is provided in FIG. 2.

The header element 200 comprises a sensing element coupling 202, a cavity 204, a first adhesive dispensing configuration 206, a recessed cavity and tube coupling 208, a second adhesive dispensing configuration 210, and an electrical coupling 212. Although the example of FIG. 2 shows one sensing element coupling, one cavity, one first adhesive dispensing configuration, one recessed cavity and tube coupling, one second adhesive dispensing configuration, and one electrical coupling, any number of such components may be present in a header element such as the header element 200.

The sensing element coupling 202 may comprise a mechanical coupling between a sensing element (e.g., the sensing element 120) and the header element 200. In some examples, the mechanical coupling is achieved via one or more adhesives.

The cavity 204 may be a "breathing hole", allowing for incoming air (e.g., at a reference pressure, at atmospheric pressure, and/or the like) to make contact with a "back side" of the sensing element, wherein the "back side" is the side proximate to the header element 200.

The first adhesive dispensing configuration 206 may be such that the adhesive of the sensing element coupling 202 is dispensed, for example, surrounding a perimeter of the cavity 204. In some examples, the adhesive is dispensed according to the configuration 206 such that the cavity 204 remains unobstructed, allowing incoming air to reach the "back side" of the sensing element.

The recessed cavity and tube coupling 208 may comprise a recessed cavity defined by the header element 200, wherein the recessed cavity is configured to fit a tube (e.g., such as the tube 124). The recessed cavity and tube coupling 208 may comprise a coupling between the tube and the header element 200. The coupling may be achieved via welding (e.g., resistance welding, laser welding, and/or the like).

The second adhesive dispensing configuration 210 may be such that an adhesive coupling various components of the header element 200 (e.g., a plate, a TO header, etc.) is dispensed, for example, to avoid arcing between the header element 200 and pins (e.g., the one or more terminals 134) coupled to the header element 200. The adhesive of the configuration 210 may be dispensed onto a surface of the TO header proximate to the plate such that the TO header and the plate are adhered to one another. The plate may be comprised of metal and/or other materials.

The electrical coupling 212 may be a coupling between the sensing element and the pins. The electrical coupling 212 may comprise wire-bonds configured to electrically couple the sensing element to the pins.

To fabricate the header element 200, various components may be configured. Glass fusion may be used to seal the pins to the plate and/or the header. For example, glass fusion may create a hermetic seal between the pins and the plate and/or the header. One or more cavities may be formed on one end of the TO header and one or more corresponding cavities may be formed through the plate such that one end of the tube may be proximate to the one or more cavities of the TO header and at least a portion of the tube may be disposed within the one or more corresponding cavities through the plate. The one or more cavities of the TO header may extend only through a portion of the thickness of the TO header. The sensing element, which may comprise an opening on one end such that the "back side" of the piezoresistive sensor may be exposed, may be coupled to the TO header via an adhesive such that the opening at least partially aligns with at least one cavity of the one or more cavities of the TO header (e.g., via the sensing element coupling 202). The plate and the TO header may be coupled to one another via an adhesive dispensed between the TO header and the plate such that arcing between the header element 200 and the pins may be avoided.

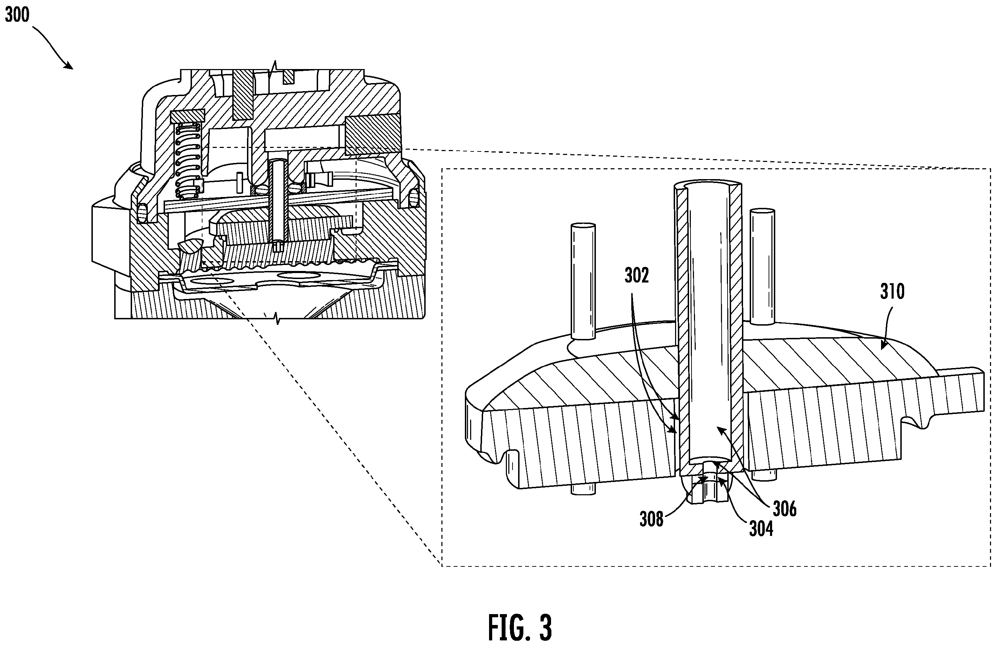

Referring now to FIG. 3, a perspective cross-sectional view of an example header element 300 is provided. The header element 300 may be or replace the header element 122 in a sensor such as the sensor 100. A blown-up view of the header element 300 is provided in FIG. 3.

The header element 300 comprises a tube coupling 302, a sensing element coupling 304, a cavity 306 defined by a tube, a first adhesive dispensing configuration 308, and a second adhesive dispensing configuration 310. Although the example of FIG. 3 shows one tube coupling, one sensing element coupling, one cavity defined by the tube, one first adhesive dispensing configuration, and one second adhesive dispensing configuration, any number of such components may be present in a header element such as the header element 300.

The tube coupling 302 may comprise glass fusion. For example, the tube may be coupled to the header element 300 via glass fusion. The glass fusion may create a hermetic seal between the tube and the header element 300. The tube coupling 302 may be between at least an inner portion of a cavity defined by the header element 300 and at least an outer portion of the tube.

The sensing element coupling 304 may comprise a mechanical coupling between a sensing element (e.g., the sensing element 120) and the header element 300. In some examples, the mechanical coupling is achieved via one or more adhesives. In some examples, the sensing element has a footprint of 0.4 mm by 0.4 mm; however, the sensing element may be of any size suitable for various applications.

The cavity 306 defined by the tube may be an opening through one end of the tube. The diameter of the cavity 306 may be smaller than the diameter of the cavity defining the tube (e.g., the cavity which causes the tube to be a tube rather than a solid cylinder). The diameter of the cavity 306 may correspond to a cavity extending at least partially through the thickness of the sensing element.

The first adhesive dispensing configuration 308 may be such that an adhesive coupling the sensing element to a TO header of the header element 300 is dispensed, for example, surrounding a perimeter of the cavity of the sensing element and/or the cavity 306. In some examples, the adhesive is dispensed according to the configuration 308 such that cavity of the sensing element and/or the cavity 306 remain unobstructed, allowing incoming air to reach the "back side" of a piezoresistive sensor of the sensing element.

The second adhesive dispensing configuration 310 may be such that an adhesive coupling various components of the header element 300 (e.g., a plate, a TO header, etc.) is dispensed, for example, to avoid arcing between the header element 300 and pins (e.g., the one or more terminals 134) coupled to the header element 300. The adhesive of the configuration 310 may be dispensed onto a surface of the TO header proximate to the plate such that the TO header and the plate are adhered to one another. The plate may be comprised of metal and/or other materials.

To fabricate the header element 300, various components may be configured. Glass fusion may be used to seal pins (e.g., the one or more terminals 134) to the plate and/or the header. For example, glass fusion may create a hermetic seal between the pins and the plate and/or the header. Glass fusion may be used to couple the tube to the TO header. For example, glass fusion may create a hermetic seal between the tube and the TO header. The sensing element may be coupled to the end of the tube comprising the cavity 306 such that the cavity 306 aligns with the cavity of the sensing element. For example, the sensing element may be coupled to the tube via an adhesive dispensed such that the cavity 306 and the cavity of the sensing element remain unobstructed. The plate and the TO header may be coupled to one another via an adhesive dispensed between the TO header and the plate such that arcing between the header element 300 and the pins may be avoided.

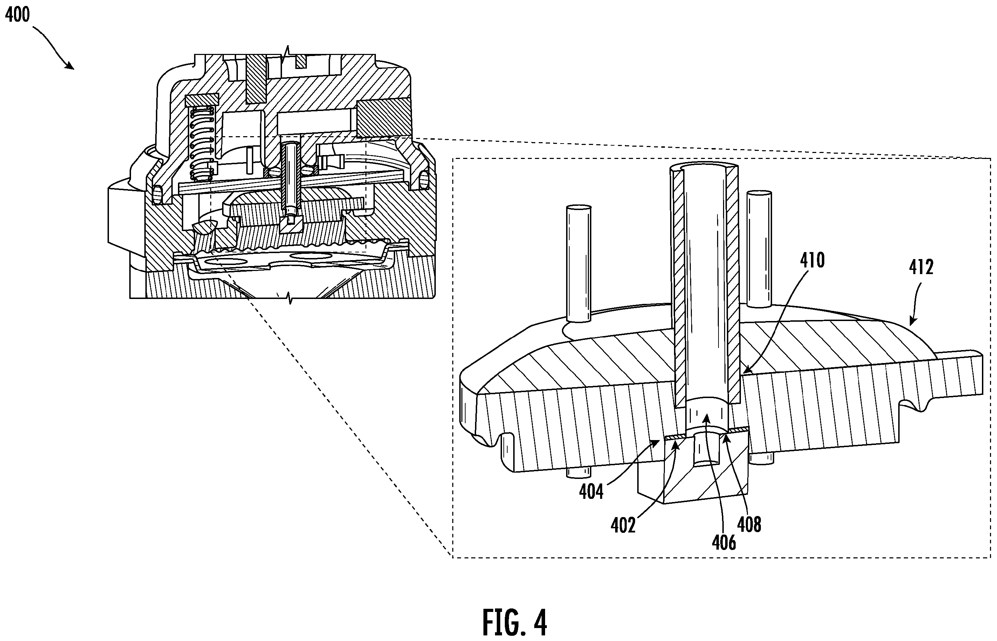

Referring now to FIG. 4, a perspective cross-sectional view of an example header element 400 is provided. The header element 400 may be or replace the header element 122 in a sensor such as the sensor 100. A blown-up view of the header element 400 is provided in FIG. 4.

The header element 400 comprises a sensing element coupling 402, a recessed cavity 404 defined by the TO header of the header element 400, a cavity 406 defined by the TO header, a first adhesive dispensing configuration 408, a tube coupling 410, and a second adhesive dispensing configuration 412. Although the example of FIG. 4 shows one sensing element coupling, one recessed cavity, one cavity, one first adhesive dispensing configuration, one tube coupling, and one second adhesive dispensing configuration, any number of such components may be present in a header element such as the header element 400.

The sensing element coupling 402 may comprise a mechanical coupling between a sensing element (e.g., the sensing element 120) and the header element 400. For example, the sensing element coupling 402 may be a mechanical coupling between the sensing element and a TO header of the header element 400. In some examples, the mechanical coupling is achieved via one or more adhesives. In some examples, the sensing element has a footprint of 1.6 mm by 1.4 mm; however, the sensing element may be of any size suitable for various applications.

The recessed cavity 404 may be a recessed cavity defined by the TO header. For example, the recessed cavity 404 may extend only through a portion of the thickness of the TO header. The recessed cavity 404 may be defined on one end of the TO header such that the sensing element, when disposed within the recessed cavity 404, may be at least partially recessed within the TO header. For example, only a portion of the sensing element may protrude past a surface of the TO header.

The cavity 406 may be a cavity defined by the header 400. The cavity 406 may be a cavity extending from the recessed cavity 404 to the opposite end of the TO header. The cavity 406 may comprise a corresponding cavity extending through a plate of the header element 400. The diameter of the cavity 406 may be smaller than the diameter of the recessed cavity 404. The cavity 406 be configured to allow air traveling through a tube to travel to the sensing element (e.g., to a piezoresistive sensor of the sensing element).

The first adhesive dispensing configuration 408 may be such that an adhesive coupling the sensing element to a TO header of the header element 400 is dispensed, for example, surrounding a perimeter of the cavity of the sensing element and/or the cavity 406. In some examples, the adhesive is dispensed according to the configuration 408 such that cavity of the sensing element and/or the cavity 406 remain unobstructed, allowing incoming air to reach the "back side" of a piezoresistive sensor of the sensing element.

The tube coupling 410 may comprise disposing the tube within the portion of the cavity 406 extending through the plate and/or through the TO header. The tube coupling 410 may comprise welding the tube to the header element 400 at the plate and/or at the TO header. For example, the welding may be resistance welding and/or laser welding.

The second adhesive dispensing configuration 412 may be such that an adhesive coupling various components of the header element 400 (e.g., the plate, the TO header, etc.) is dispensed, for example, to avoid arcing between the header element 400 and pins (e.g., the one or more terminals 134) coupled to the header element 400. The adhesive of the configuration 412 may be dispensed onto a surface of the TO header proximate to the plate such that the TO header and the plate are adhered to one another. The plate may be comprised of metal and/or other materials.

To fabricate the header element 400, various components may be configured. Glass fusion may be used to seal pins (e.g., the one or more terminals 134) to the plate and/or the header. For example, glass fusion may create a hermetic seal between the pins and the plate and/or the header. The sensing element may be coupled to the TO header via the first adhesive dispensing configuration 408 in the recessed cavity 404. The TO header may define the cavity 406. The sensing element may be a large sensing element (e.g., with a footprint of approximately 1.6 mm by 1.4 mm, larger in comparison to sensing elements with a footprint of approximately 0.4 mm by 0.4 mm). The large sensing element may further have increased height. To avoid contact between the sensing surface and/or "front" surface of the sensing element and a diaphragm (e.g., the diaphragm 116), the sensing element may be disposed within the recessed cavity 404 such that only a portion of its thickness protrudes past the surface of the TO header. The tube may be disposed within the portion of the cavity 406 extending through the plate and/or the TO header. The tube may be welded (e.g., via resistance welding, laser welding, and/or the like) to the plate and/or the TO header. The plate and the TO header may be coupled to one another via an adhesive dispensed between the TO header and the plate according to the second adhesive dispensing configuration 412 such that arcing between the header element 400 and the pins may be avoided.

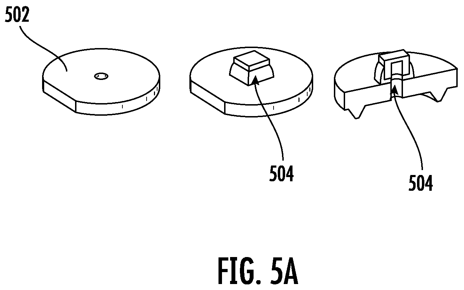

FIGS. 5A-5B show a header element 500 comprising a header plate assembly 502. The header element 500 may be or replace the header element 122 in a sensor such as the sensor 100. A blown-up view of the header element 500 is provided in FIGS. 5A-5B.

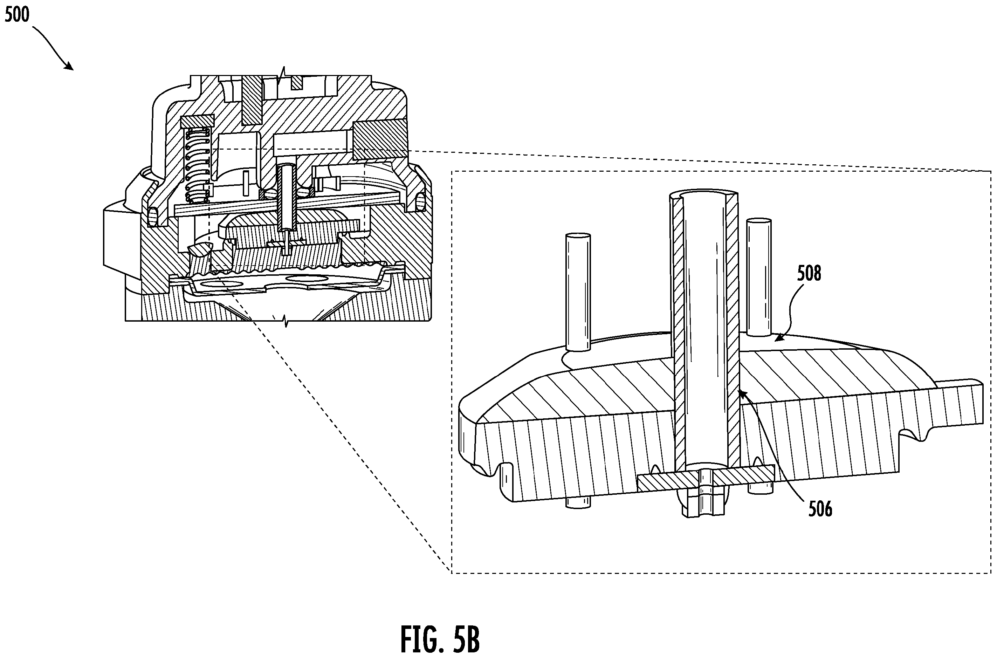

Referring now to FIG. 5A, a series of perspective views of a header plate of an example header element is provided. The header element 500 (shown in detail in FIG. 5B) comprises the header plate assembly 502. The header plate assembly 502 may be substantially cylindrical, with a substantially flat edge on one side and/or protruding pointed features extending from one end (the "bottom" end). The protruding pointed features may be energy directing features. The header plate assembly 502 may define a cavity extending through the thickness of the header plate of the header plate assembly 502, wherein the cavity is approximately at the center of the header plate. The header plate assembly 502 may comprise a sensing element coupling 504. The sensing element coupling 504 may be such that an adhesive is dispensed on an end of the header plate (e.g., a "top" end). The adhesive may be dispensed, for example, via a screen printing process such that the cavity of the header plate (and a corresponding cavity extending a portion of the thickness of the sensing element) remains unobstructed. The screen printing may comprise dispensing the adhesive via a squeeze applicator onto a mesh film (wherein the film defines one or more holes corresponding to a diameter of the adhesive to be dispensed, varying to suit applications) which is disposed on a "front" end of the header plate such that a precise amount of adhesive may be dispensed, wherein the "front" end of the header plate may be the end of the header plate proximate to the sensing element.

Referring now to FIG. 5B, a perspective cross-sectional view of the example header element 500 including the header plate assembly 502 of FIG. 5A is provided. The header element 500 may comprise a TO header and/or a plate. The TO header may comprise a recessed cavity configured to accommodate the header plate assembly 502. The header plate assembly 502 may be coupled to the TO header via the recessed cavity. For example, the header plate assembly 502 may be welded (e.g., via resistance welding and/or the like) to the TO header. The energy directing features of the header plate assembly 502 may be configured to melt based on the resistance welding such that the header plate assembly 502 and the TO header become joined.

The header element 500 includes a tube coupling 506 and an adhesive dispensing configuration 508. The tube coupling 506 may comprise disposing a tube within a portion of a cavity extending through the plate and/or through the TO header. The tube coupling 506 may comprise welding the tube to the header element 500 at the plate and/or at the TO header. For example, the welding may be resistance welding and/or laser welding. The adhesive dispensing configuration 508 may be such that an adhesive coupling various components of the header element 500 (e.g., the plate, the TO header, etc.) is dispensed, for example, to avoid arcing between the header element 500 and pins (e.g., the one or more terminals 134) coupled to the header element 500. The adhesive of the configuration 508 may be dispensed onto a surface of the TO header proximate to the plate such that the TO header and the plate are adhered to one another. The plate may be comprised of metal and/or other materials.

To fabricate the header element 500, various components may be configured. Glass fusion may be used to seal pins (e.g., the one or more terminals 134) to the plate and/or the header. For example, glass fusion may create a hermetic seal between the pins and the plate and/or the header. The header element assembly 502 may be resistance welded to the TO header. For example, the header element assembly may be resistance welded to the TO header in the recessed cavity defined by the TO header. The tube may be disposed within the portion of the cavity extending through the plate and/or the TO header. The tube may be welded (e.g., via resistance welding, laser welding, and/or the like) to the plate and/or the TO header. The plate and the TO header may be coupled to one another via an adhesive dispensed between the TO header and the plate according to the adhesive dispensing configuration 508 such that arcing between the header element 500 and the pins may be avoided.

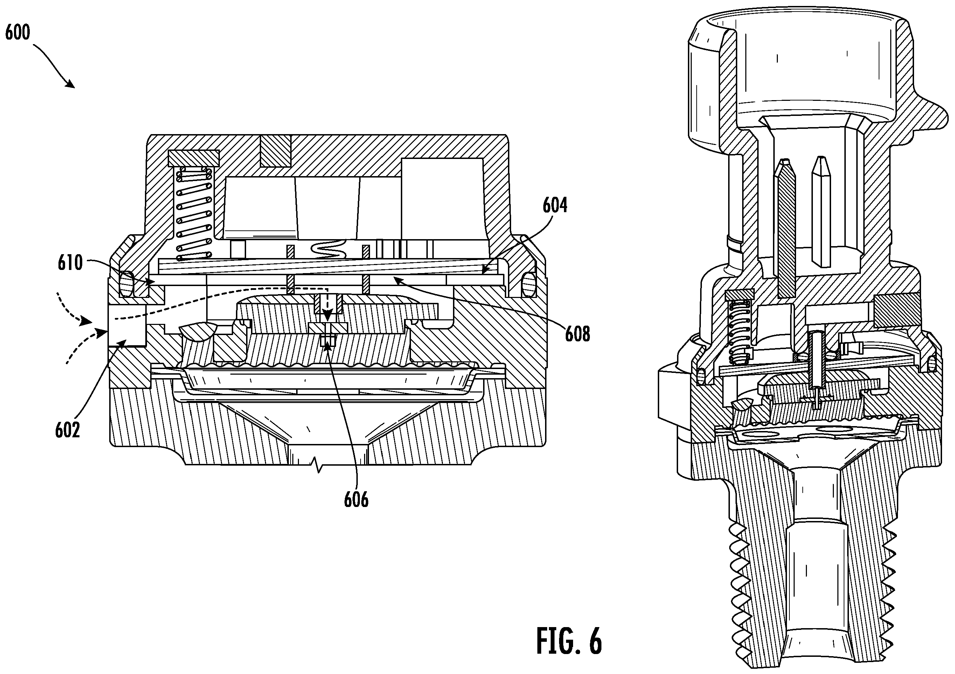

Referring now to FIG. 6, a close-up cross-sectional view of an example media-isolated relative gauge pressure sensor 600 is provided. The sensor 600 may comprise a base port, an assembly, and a connector.

The assembly may be comprised of metal and/or other materials. For example, the assembly may be comprised of SS304. The assembly may be a hex-assembly and/or other types of assembly. The assembly of the sensor 600 may comprise a plug 602, a pad 604, a sensing element 606, a coating 608, and a PCBA 610.

The plug 602 may be comprised of Teflon, polytetrafluoroethylene (PTFE), and/or other materials. The plug 602 may be configured to allow air at a reference pressure to travel into the sensor 600. The plug 602 may be hydrophilic such that moisture present in the air traveling through the plug 602 may be absorbed by the plug 602, allowing moisture-free air (or substantially moisture-free air) to travel into the sensor 600 (e.g., to a "back" side of a sensing element-the side proximate to a header element comprised by the assembly).

The assembly may define a cavity. The cavity may be configured to house the plug 602. The cavity may be configured to allow air at the reference pressure to travel into the sensor 600 (e.g., such that it reaches the back side of the sensing element). The cavity may be coupled one or more other cavities. For example, the one or more other cavities may, along with the second cavity 140, define a path to the sensing element.

The pad 604 may be comprised of silicone and/or other materials. The pad 604 may be disposed proximate to the PCBA 610 and to the assembly. For example, the pad 604 may be disposed between the PCBA 610 and the assembly such that one surface of the pad 604 is in direct physical contact with at least a portion of the assembly, and an opposite surface of the pad 604 is in direct physical contact a "back" side of the PCBA 610 (wherein the back side is opposite the side of the PCBA 610 on which electronic components are mounted). The pad 604 may be configured to be compressed by mechanical coupling (e.g., crimping) between the connector and the assembly. Based on being compressed, the pad 604 may be configured to isolate the PCBA 610 (and its components) from the air traveling in via the plug 602.

The sensing element 606 may be a pressure sensing element. The sensing element 606 may be a force sensing element. In some examples, the sensing element 606 is piezoresistive sensing element, wherein the piezoresistive sensing element 606 comprises a Wheatstone bridge configured to convert received pressure and/or force into a change in resistance. The sensing element 606 may be configured to receive the pressure (e.g., the pressure of a medium being sensed) and/or force via an incompressible fluid, wherein the incompressible fluid is configured to receive the pressure and/or force via a diaphragm. The sensing element 606 may be configured to then transmit the sensed pressure and/or force to the PCBA 610 via one or more terminals. For example, the sensing element 606 may be electrically coupled to the one or more terminals (e.g., via wire-bonds).

The coating 608 may be a coating applied to the "back" side of the PCBA 610. The coating 608 may be a conformal coating. The coating 608 may be configured to seal openings and/or cavities of the PCBA 610. The coating 608 may be configured to isolate tracks of the PCBA 610 from contaminants (e.g., air, moisture, and/or the like).

The PCBA 610 may comprise one or more electronic components, for example, such as an ASIC and/or the like. The one or more electronic components may be electrically coupled to the PCBA 610. The PCBA 610 may be configured to receive, via the one or more terminals, the change in resistance generated by the Wheatstone bridge of the sensing element 606 responsive to the received pressure and/or force. The PCBA 610 may be further configured to convert the resistance into various types of outputs, as suitable for various applications. For example, the PCBA 610 may be configured to convert the resistance into analog output, regulated output, digital output, current output, and/or other types of output.

To fabricate the sensor 600, various components may be configured. The base port may be coupled to the assembly, and the assembly may also be coupled to the connector. In various examples, the sensor 600 may comprise various header assembly configurations (e.g., headers, header elements, pins, sensing elements, cavities, etc.). For example, the sensor 600 may comprise any one or more of the components, features, and/or examples of FIGS. 2, 3, 4, 5A, and/or 5B.

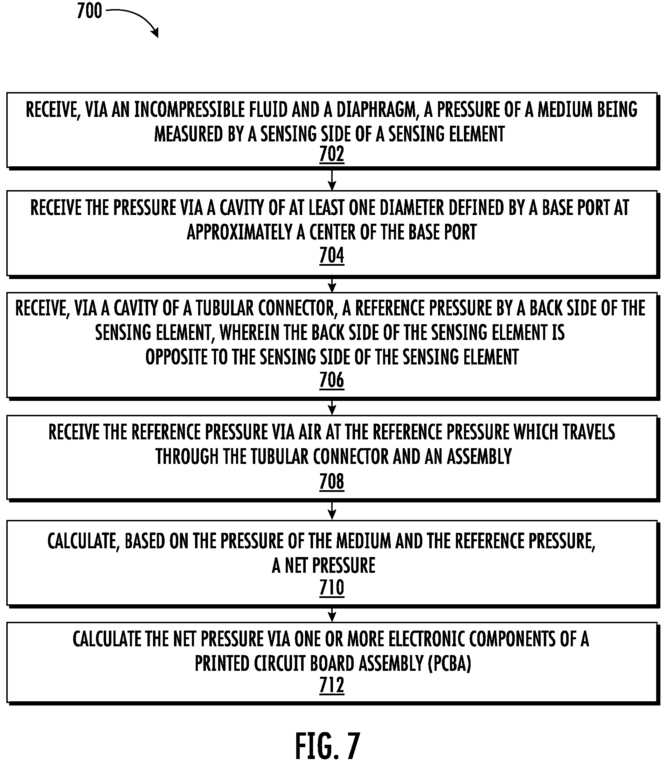

Referring now to FIG. 7, a flowchart of an exemplary method 700 of constructing a media-isolated relative gauge pressure sensor is provided.

At step/operation 702, a base port may be welded to an assembly. For example, the base port may be laser welded to the assembly.

At step/operation 704, a tubular connector may be mechanically coupled to the assembly via crimping and/or crimping adhesive, wherein: (i) the tubular connector comprises a cavity for allowing air at a reference pressure to enter internal portions of the tubular connector and the assembly, (ii) the tubular connector is mechanically coupled to a metal tube inserted in at least a portion of the cavity and disposed substantially parallel to the tubular connector. and (iii) the tubular connector comprises an O-ring surrounding an outer circumference of the metal tube.

At step/operation 706, a diaphragm may be welded to the assembly. For example, the diaphragm may be resistance welded to the assembly.

At step/operation 708, a header element may be welded to the assembly, wherein the header element has a first substantially cylindrical cavity of a first diameter and a second substantially cylindrical cavity of a second diameter, and wherein the first diameter is greater than the second diameter. The header element may be a TO header element. The header element may be laser welded to the assembly.

At step/operation 710, a sensing element may be electrically coupled to the header element. For example, the sensing element may be wire-bonded to the header element.

At step/operation 712, a PCBA may be coupled to the header element via one or more pins (e.g., metal pins, terminals, metal terminals, and/or the like). The PCBA may comprise one or more electronic components.

At step/operation 714, a cavity of at least one diameter may be defined at approximately a center of the base port, wherein the diaphragm is configured to receive pressure from a medium via the cavity defined by the base port and impart the pressure to an incompressible fluid, and wherein the incompressible fluid is configured to impart the pressure to a sensing side of the sensing element.

At step/operation 716, the PCBA may be configured to calculate a net pressure based on the reference pressure and the pressure of the medium.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described /above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. An apparatus comprising:
a base port;
an assembly welded to the base port; and
a tubular connector coupled to the assembly, wherein:
the tubular connector comprises a cavity for allowing air at a reference pressure to enter internal portions of the tubular connector and the assembly such that the cavity is configured to facilitate flow of the air at the reference pressure to a back side of a sensing element, wherein the back side of the sensing element is opposite to a sensing side of the sensing element that is configured to receive pressure, via an incompressible fluid, from a medium being measured;
the tubular connector is coupled to a metal tube inserted in at least a portion of the cavity and disposed substantially parallel to the tubular connector; and
the tubular connector comprises an O-ring surrounding an outer circumference of the metal tube.

2. The apparatus of claim 1, wherein the assembly is coupled to the tubular connector via at least one of:
crimping; or
a crimping adhesive.

3. The apparatus of any of claims 1 to 2, wherein the assembly further comprises:
a diaphragm resistance welded to the assembly;
a transistor outline (TO) header element having a first substantially cylindrical cavity of a first diameter and a second substantially cylindrical cavity of a second diameter, wherein the first diameter is greater than the second diameter;
the sensing element wire-bonded to the TO header element;
the incompressible fluid dispensed between the TO header element and the diaphragm; and
a printed circuit board assembly (PCBA) comprising electronics, wherein the PCBA is coupled to the TO header via metal pins.

4. The apparatus of any of claims 1 to 3, wherein the base port defines a cavity of at least one diameter at approximately its center, and wherein the diaphragm is configured to receive pressure from a medium via the cavity defined by the base port and impart the pressure to the incompressible fluid, and wherein the incompressible fluid is configured to impart the pressure to a sensing side of the sensing element.

5. The apparatus of any of claims 1 to 4, wherein the reference pressure is atmospheric pressure.

6. The apparatus of any of claims 1 to 5, wherein the PCBA is configured to calculate a net pressure based on the reference pressure and the pressure of the medium.

7. The apparatus of any of claims 1 to 6, wherein the tubular connector is comprised of plastic.

8. A system comprising:
an automotive exhaust assembly; and
a media-isolated relative gauge pressure sensor for measuring exhaust pressure with respect to atmospheric pressure, wherein the media-isolated relative gauge pressure sensor comprises:
a base port;
an assembly welded to the base port; and
a tubular connector coupled to the assembly, wherein:
the tubular connector comprises a cavity for allowing air at a reference pressure to enter internal portions of the tubular connector and the assembly such that the cavity is configured to facilitate flow of the air at the reference pressure to a back side of a sensing element, wherein the back side of the sensing element is opposite to a sensing side of the sensing element that is configured to receive pressure, via an incompressible fluid, from a medium being measured;
the tubular connector is coupled to a metal tube inserted in at least a portion of the cavity and disposed substantially parallel to the tubular connector; and
the tubular connector comprises an O-ring surrounding an outer circumference of the metal tube.

9. The system of claim 8, wherein the assembly is coupled to the tubular connector via at least one of:
crimping; or
a crimping adhesive.

10. The system of any of claims 8 to 9, wherein the assembly further comprises:
a diaphragm resistance welded to the assembly;
a transistor outline (TO) header element having a first substantially cylindrical cavity of a first diameter and a second substantially cylindrical cavity of a second diameter, wherein the first diameter is greater than the second diameter;
the sensing element wire-bonded to the TO header element;
the incompressible fluid dispensed between the TO header element and the diaphragm; and
a printed circuit board assembly (PCBA) comprising electronics, wherein the PCBA is coupled to the TO header via metal pins.

11. The system of any of claims 8 to 10, wherein the base port defines a cavity of at least one diameter at approximately its center, and wherein the diaphragm is configured to receive pressure from a medium via the cavity defined by the base port and impart the pressure to the incompressible fluid, and wherein the incompressible fluid is configured to impart the pressure to a sensing side of the sensing element.

12. The system of any of claims 8 to 11, wherein the reference pressure is atmospheric pressure.

13. The system of any of claims 8 to 12, wherein the PCBA is configured to calculate a net pressure based on the reference pressure and the pressure of the medium.

14. The system of any of claims 8 to 13, wherein the tubular connector is comprised of plastic.

15. A method comprising:
receiving a pressure of a medium being measured by a sensing side of a sensing element via at least:
an incompressible fluid;
a diaphragm; and
from a cavity of at least one diameter defined by a base port at approximately a center of the base port;
receiving, via air at the reference pressure which travels through a cavity of a tubular connector and an assembly, a reference pressure by a back side of the sensing element;
wherein the back side of the sensing element is opposite to the sensing side of the sensing element; and
wherein the sensing element is coupled to a header element disposed between the tubular connector and the assembly; and
calculating, based on the pressure of the medium and the reference pressure and via one or more electronic components of a printed circuit board assembly (PCBA), a net pressure.
